Europäisches Patentamt

European Patent Office

Office européen des brevets

(19)

(11) Veröffentlichungsnummer: **0 141 219**
**B1**

(12) **EUROPÄISCHE PATENTSCHRIFT**

(45) Veröffentlichungstag der Patentschrift:
26.07.89

(51) Int. Cl.⁴: **G 05 D 1/03**

(21) Anmeldenummer: **84111171.9**

(22) Anmeldetag: **19.09.84**

(54) Verfahren und Vorrichtung zur Spurführung eines gleislosen Fahrzeuges.

| | |
|---|---|
| (30) Priorität: **23.09.83 DE 3334548** | (73) Patentinhaber: **M.A.N. Technologie GmbH, Dachauer Strasse 667, D-8000 München 50 (DE)** |
| (43) Veröffentlichungstag der Anmeldung: **15.05.85 Patentblatt 85/20** | (72) Erfinder: **Faller, Rainer, Dipl.-Ing., Wildenholzenerstrasse 26, D-8000 München 80 (DE)** Erfinder: **Landstorfer, Friedrich, Prof. Dr.-Ing., Pirolstrasse 3a, D-8000 München 60 (DE)** |
| (45) Bekanntmachung des Hinweises auf die Patenterteilung: **26.07.89 Patentblatt 89/30** | |
| (84) Benannte Vertragsstaaten: **BE DE FR GB IT NL SE** | |
| (56) Entgegenhaltungen: **CA-A- 1 196 711 DE-A- 3 034 659 FR-A- 2 409 541** | |

**Beschreibung**

Die Erfindung bezieht sich auf ein Verfahren und eine Vorrichtung zum Messen des Abstandes zwischen einem Bezugspunkt eines elektronisch spurgeführten Fahrzeugs und einem Leitkabel, das ein Magnetfeld erzeugt, bei dem mittels einer den Bezugspunkt darstellenden und als Antenne ausgebildeten Kreuzspule zwei orthogonale Komponenten des Magnetfeldes gemessen werden.

Eine Anordnung dieser Art ist aus der DE-PS 3 015 954 bekannt, bei der mittels einer als Kreuzspule ausgebildeten Antenne das Magnetfeld eines in der Fahrbahn verlegten Leitkabels zweidimensional abgetastet wird. Die Antennensignale werden schließlich zur Lenkung des Fahrzeugs entsprechend verarbeitet. Bei derartig gelenkten Fahrzeugen ist für eine ausreichende Überwachung zu sorgen, die sicherstellt, daß bei Ausfall von Systemkomponenten das Fahrzeug nicht in einen gefährlichen Zustand gerät. Bei der bekannten Vorrichtung ist dazu ein dem Leitkabelfeld überlagertes Diagnosefeld mit vorbestimmter Amplitude und Frequenz vorgesehen, mit dem ein Testsignal zur Überwachung der Antennenanordnung erzeugt wird. Auf diese Weise wird eine Störung in der Lenkführung angezeigt, so daß der Fahrer entsprechende Maßnahmen ergreifen kann. Fällt bei dieser bekannten Einrichtung die Empfängerantenne aus, so wird die Lenksteuerung spontan unterbrochen.

Der Erfindung liegt die Aufgabe zugrunde, ein Verfahren zur sicheren Führung eines Fahrzeuges zu schaffen, bei dem bei einem Ausfall der Empfängerantenne eine Fortführung der Lenksteuerung möglich ist.

Die Aufgabe wird mit den im Anspruch 1 gekennzeichneten Merkmalen gelöst.

Durch die redundante Messung der Feldkomponenten ist ein kontinuierlicher Betrieb der Steuerung gewährleistet, wenn eines der Meßsysteme ausfällt. Die Meßsignale können aufgrund ihrer Orts- und Zeitsimultanität gleichzeitig für eine Überwachungseinrichtung verwendet werden, die einen Fehler anzeigt, wenn bei der Verwendung von zwei Meßsystemen eines ausfällt bzw. einen Fehler anzeigt und ortet, wenn ein drei oder mehr Kanalsystem verwendet wird. Mit dem erfindungsgemäßen Verfahren ist somit eine dynamische kontinuierliche Überwachung und rasche Fehleranzeige möglich. Es ist hierzu also kein zusätzliches Magnetfeld für Diagnosezwecke, wie beim Stand der Technik notwendig.

Die Erfindung erstreckt sich auf eine Vorrichtung zur Durchführung des Verfahrens mit den im Anspruch 2 gekennzeichneten Merkmalen.

Die erfindungsgemäße Antenne hat den Vorteil, daß mit fertigungstechnisch sehr einfachen Maßnahmen gleichzeitig mehrere Feldmessungen eines selben Ortes geliefert werden können, die einerseits bei einem Einsatzwechsel der Kanäle keine sprunghafte, sondern stetige Fortführung der Lenkung sicherstellt und eine dynamische kontinuierliche Überwachung durch einfachen Vergleich der Meßsignale ermöglicht.

Um die Fortsetzung des Fahrbetriebes zumindest bis zum Abstellen des Fahrzeuges sicherzustellen, wenn in einem der Kanäle eine Störung auftritt, kann ein einfaches zweikanaliges System mit bifilaren Spulen vorgesehen werden, wobei zusätzlich eine Störanzeige möglich ist. Vorzugsweise ist die Antenne mit trifilaren Spulen ausgestattet, die darüber hinaus auch eine schnelle und sichere Erkennung des gestörten Kanals ermöglichen.

Eine Absenkung des Kurzschlußstromes bei Windungs- oder Lagenschluß kann in der Wicklung eines Kanals durch Verwendung von Widerstandsdraht erreicht werden, womit eine Rückwirkung auf andere Kanäle einer gleichen Spule auf ein vertretbares Minimum bringbar ist.

Ist die Gefahr eines Kurzschlusses beispielsweise durch Reibung der Drähte zugehörig zu verschiedenen Kanälen möglich, so wird gemäß einer weiteren Ausgestaltung der Erfindung vorgeschlagen, in den Spulendrähten den vom Leitkabel-Magnetfeld induzierten Strömen Gleichströme zu überlagern. Auf diese Weise können Kurzschlüsse zwischen einzelnen Drähten im multifilaren Aufbau einer Spule, die keinen Einfluß auf die vom Magnetfeld induzierte Spannung an den Spulenabgriffen haben, aufgrund eines veränderten Gleichstromverlaufes doch erkannt und signalisiert werden.

Gemäß einer weiteren Ausgestaltung der Erfindung wird den Spulen ein gemeinsamer Einzelkern zugeordnet, der so groß ist, daß die Abstandsmessungen bei bis zu 30facher Leitkabel-Feldveränderungen noch durchführbar ist. Damit wird eine hohe Empfindlichkeit der Empfängerantennen erreicht, die große Signale und damit gute Meßergebnisse liefern, auch wenn die Leitkabelströme stark schwanken, oder wie z.B. bei Kabelbrüchen stark absinken.

Eine vorteilhafte Ausgestaltung des Eisenkernes ist eine E-förmige Anordnung, bei dem die Schenkel jeweils mit den Spulen umwickelt sind.

In der Zeichnung sind Ausführungsbeispiele gemäß der Erfindung schematisch dargestellt. Es zeigen:

Figuren 1 und 2 je ein Ausführungsbeispiel und

Figur 3 eine Anordnung für die Gleichstromüberwachung.

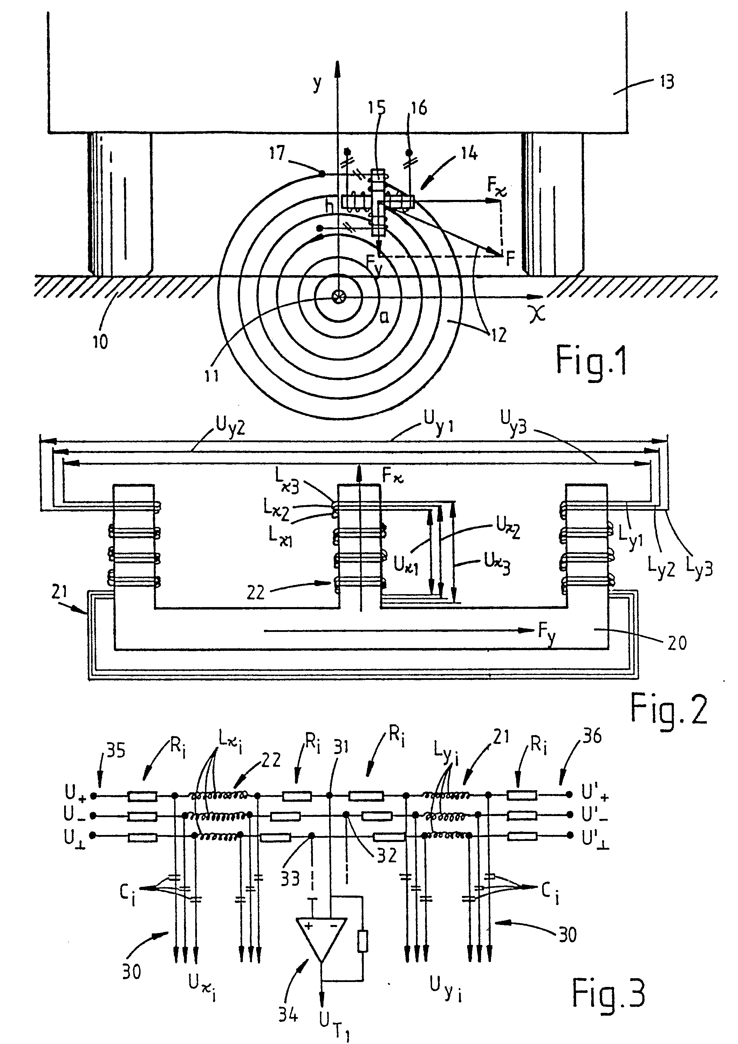

Figur 1 zeigt ein von Wechselstrom durchflossenes, in einer Fahrbahn 10 angeordnetes Leitkabel 11, dessen Magnetfeld 12 zur selbsttätigen Steuerung eines Fahrzeuges 13 von einer Empfängersantenne 14 abgetastet wird. Die Antenne 14 besteht aus einem Kreuz-Eisenkern 15, dessen Schenkel mit bifilaren Spulen 16 bzw. 17 umwickelt sind.

Die Antenne 14 ist so angeordnet, daß ein Zweig des Eisenkernes 15 mit der Spule 16 zur Erfassung der horizontalen Feldkomponente $F_x$ waagrecht angeordnet ist. Für die vertikale Feldkomponente $F_y$ ist der zweite, senkrecht angeordnete Zweig mit der Spule 17 vorgesehen. Mit dieser Spulenanordnung können durch Messen der Induktionsspannungen über die Feldkomponenten $F_y$ und $F_x$ aufgrund des Verhältnisses

$$\frac{F_x}{F_y} = \frac{h}{a} \qquad (1)$$

Rückschlüsse auf die Positionierung der Antenne 14 innerhalb des Magnetfeldes 12 gezogen werden, bzw. aus der Gleichung 1

$$a = h \frac{F_y}{F_x}$$

der seitliche Abstand a errechnet werden, wenn die Höhe h zwischen Leitkabel 11 und Antenne 14 bekannt ist.

Die von den Spulen 16 und 17 gelieferten Signale werden nach bekannten Verfahren (beispielsweise nach der DE-OS 3 015 954) verarbeitet und einer Lenkanlage zugeführt, um das Fahrzeug entlang des Leitkabels 11 zu führen.

Aufgrund der bifilaren Spulenwicklung werden für jede Koordinate jeweils zwei Signale erzeugt, wovon je nach Bearbeitungssystem jeweils eines oder beide zur Bildung eines Lenksignals eingesetzt werden. Bei Ausfall eines Signales wird das zweite Signal-Paar verwendet.

Die vier Antennensignale werden zusätzlich einer nicht dargestellten Überwachungseinheit bekannter Art (beispielsweise gemäss DE-PS 1 272 834) zugeführt, die bei einer Störung, z.B. bei einer Unterbrechung eines Spulendrahtes dem Fahrer die Störung akustisch und/oder optisch meldet, während das zweite Signal für die Fortsetzung der sicheren Lenkung des Fahrzeuges sorgt.

Nachdem die beiden Spulendrähte der jeweiligen Spule 16 bzw. 17 örtlich gleich angeordnet sind, erzeugen sie jeweils zur selben Zeit Signale aufgrund eines selben Feldpunktes, so daß bei einer Störung in einem Kanal der Antenne 14 die Lenkung stetig mit dem zweiten Kanal weitergesteuert werden kann, ohne daß ein sprunghaftes Lenkmanöver erfolgt. Außerdem ist durch die Orts- und Zeitgleichheit der Messungen eine sehr schnelle und sichere Erkennung der Störung möglich.

Sowohl die Spulen als auch der Eisenkern sind nicht auf die Ausführung gemäß Fig. 1 eingeschränkt. Im Rahmen der Sicherheitsmaßnahmen durch redundante Meßsysteme können Spulen mit drei oder mehr Drähten verwendet werden, die miteinander oder getrennt voneinander auf den Kern aufgewickelt sind. Außerdem kann der Eisenkern unter Beibehaltung eines orthogonalen Grundverlaufes verschiedenförmig einteilig oder mehrteilig ausgebildet werden.

In Fig. 2 ist ein Ausführungsbeispiel mit einem E-förmigen Eisenkern 20 dargestellt, dessen äußeren Schenkel mit einer ersten Spule 21 für die $F_y$-Feldkomponente und der innere Schenkel mit einer zweiten Spule 22 für die $F_x$-Feldkomponente bewickelt sind. In diesem Fall bestehen die Spulen 21 und 22 je aus drei Drähten $L_{y1}$, $L_{y2}$, $L_{y3}$ bzw. $L_{x1}$, $L_{x2}$ und $L_{x3}$, an deren Enden durch die Feldinduktion Spannungen

$$U_{y1} = U_{y2} = U_{y3} \text{ und}$$
$$U_{x1} = U_{x2} = U_{x3}$$

anstehen. Die beiden Spulen 21 und 22 bilden somit ein Dreikanal-Steuersystem, bei dem durch einen Vergleich von zwei aus drei Kanälen eine Störung nicht nur erkannt, sondern auch festgestellt werden kann, in welchem Kanal die Störung aufgetreten ist.

Die E-Eisenkernform eignet sich für besonders große Eisenkerne, was für empfindliche Messungen bei stärker schwankenden Leitkabelströmen und damit bei höheren Magnetfeldänderungen erwünscht ist. Die Überwachung der Antenne kann wie beschrieben direkt aufgrund der Spulensignale erfolgen. Für die Erkennung kanalübergreifender Fehler sind den Spulen weitere Stromquellen überlagert und der überlagerte Stromfluß ist als Überwachungssignal zu verwenden.

Ein Beispiel hierzu ist in Fig. 3 näher dargestellt. Hierin sind die beiden trifilaren Spulen 21 und 22 mit den Einzelwicklungen $L_{xi}$ und $L_{yi}$ angedeutet, die jeweils mit Widerständen $R_i$ in Reihe geschaltet an unterschiedliche Potentiale angelegt sind. Zur Auskopplung der überlagerten Meßsignale sind in den Zuleitungen 30 für die Meßspannungen $U_{xi}$ jeweils Kondensatoren $C_i$ zwischengeschaltet.

In einer $L_{xi}$, $L_{yi}$-Reihenschaltung sind die Widerstände $R_i$ und die Endpotentiale $U$, $U'$ so abgestimmt, daß jeweils in einem Mittelabgriff 31 bzw. 32 und 33 die Stromsumme gleich Null ist, so daß der Strom/Spannung wandelnde Operationsverstärker 34 im ungestörten Zustand des zugehörigen Spulendraht-Systemes $L_{xi}$, $L_{yi}$ kein Signal erzeugt, d.h. daß $U_{ti} = 0$ ist. In der Zeichnung ist nur der für $L_{x1}$, $L_{y1}$ vorgesehene Operationsverstärker 34 dargestellt. Entsprechende Operationsverstärker (nicht dargestellt) sind den Abgriffspunkten 32 und 33 für die beiden übrigen Kanäle zuzuordnen.

Die drei Kanäle sind jeweils an ihrem einen Ende 35 an umgekehrte Polaritäten $U_+$, $U_-$, $U_\perp$ bzw. die Enden 36 an $U'_+$, $U'_-$, $U'_\perp$ angelegt derart, daß bei einem Kurzschluß zwischen den Drähten $L_{xi}$ der Spule 22 bzw. zwischen den Drähten $L_{yi}$ der Spule 21 in einer der im Kurzschluß beteiligten Spulen der Stromfluß sich umkehrt und damit an dem entsprechenden Abgriff 31 bis 33 sich eine Stromsumme ungleich Null einstellt, und damit ein Testsignal $U_{ti} \neq 0$ ausgegeben wird. In ähnlicher Weise wird an den Abgriffen 31 bis 33 eine Stromverschiebung erfolgen, wenn einer der Kanäle unterbrochen wird oder zwei Kanäle kurzschließen.

Mit einer nicht dargestellten Überwachungseinheit werden die Ausgänge der drei Operationsverstärker überwacht und bei einer Störung in einem der Kanäle eine Anzeige und gegebenenfalls eine Umschaltvorrichtung für die Lenkanlage betätigt.

Die hier beschriebene Gleichstromüberwachung ist eine besonders einfache Ausführung, bei der für die Operationsverstärker 34 keine Vergleichsströme erzeugt werden müssen. Es ist jedoch auch möglich die Schaltkreise in einer anderen Weise abzustimmen, bei der unterschiedliche Knotenströme mit vorbestimmten Werten verglichen und zur Überwachung herangezogen werden.

## Patentansprüche

1. Verfahren zur Messung des Abstandes zwischen einem Bezugspunkt eines elektronisch spurgeführten Fahrzeugs und einem Leitkabel, das ein Magnetfeld erzeugt, bei dem mittels einer den Bezugspunkt darstellenden und als Antenne ausgebildeten Kreuzspule zwei zueinander orthogonale Komponenten des Magnetfelds gemessen werden, dadurch gekennzeichnet, daß mindestens zwei voneinander unabhängige, orts- und zeitsimultane Messungen von jeweils einer der orthogonalen Feldkomponenten durchgeführt werden, wobei die orts- und zeitsimultanen Meßwerte einer orthogonalen Feldkomponente durch die gegenseitige Rückwirkung der Messungen nur innerhalb von Fehlergrenzen beeinflußt werden.

2. Vorrichtung zur Durchführung des Verfahrens nach Anspruch 1, mit einer als Antenne ausgebildeten Kreuzspule, bestehend aus mindestens einem Kern, der mit zwei Spulen umwickelt ist, die jeweils zur Erfassung einer der zueinander orthogonalen Feldkomponenten eines von einem Leitkabel erzeugten Magnetfeldes dienen, dadurch gekennzeichnet, daß die Spulen (16, 17, 21, 22) jeweils aus mindestens zwei voneinander elektrisch isolierten parallel nebeneinander gewickelten Spulendrähten ($L_{x1,2,3}$; $L_{y1,2,3}$) aus Widerstandsdraht bestehen.

3. Vorrichtung nach Anspruch 2, dadurch gekennzeichnet, daß trifilare Spulen (21, 22) vorgesehen sind.

4. Vorrichtung nach Anspruch 2 oder 3, dadurch gekennzeichnet, daß die Spulendrähte ($L_{x1,2,3}$; $L_{y1,2,3}$) der jeweiligen Spulen (21, 22) von Gleichströmen durchflossen werden, die sich mit den vom Magnetfeld (12) induzierten Strömen überlagern.

5. Vorrichtung nach einem der Ansprüche 2 bis 4, dadurch gekennzeichnet, daß den Spulen (21, 22) ein E-förmiger Eisenkern (20) zugeordnet ist.

6. Vorrichtung nach Anspruch 5, dadurch gekennzeichnet, daß der Eisenkern (20) so groß ist, daß die Abstandsmessung (a) bei bis zu 30facher Feldvariation noch meßbar ist.

## Claims

1. A method of measuring the distance between a reference point of an electronically lane-guided vehicle and a pilot cable which produces a magnetic field, in which two mutually orthogonal components of the magnetic field are measured by means of a cross coil representing the reference point and constructed as an aerial, characterised in that at least two measurements, which are independent of one another and are coincident in location and time, are taken of the respective orthogonal field component, the measured values of an orthogonal field component which are coincident in location and time being influenced only by the mutual inter-reaction of the measurements within limits of error.

2. A device for carrying out the method according to Claim 1 with a cross coil constructed as an aerial and consisting of at least one core which is wrapped by two coils which each serve to detect a respective one of the mutually orthogonal field components of a magnetic field produced by a pilot cable, characterised in that the coils (16, 17, 21, 22) each consist of at least two coil wires ($L_{x1,2,3}$; $L_{y1,2,3}$) composed of resistance wire which are electrically insulated from one another and are wound next to one another in parallel.

3. A device according to Claim 2, characterised in that three-wire coils (21, 22) are provided.

4. A device according to Claim 2 or 3, characterised in that the coil wires ($L_{x1,2,3}$; $L_{y1,2,3}$) of the respective coils (21, 22) are traversed by direct currents on which the currents induced by the magnetic field (12) are superimposed.

5. A device according to one of Claims 2 to 4, characterised in that the coils (21, 22) are provided with an E-shaped iron core (20).

6. A device according to Claim 5, characterised in that the iron core (20) is so large that distance measurement (a) is still measurable with up to 30-fold field variation.

## Revendications

1. Procédé de mesure de l'intervalle entre un point de référence d'un véhicule automobile guidé électroniquement par piste et un câble de guidage qui engendre un champ magnétique, selon lequel au moyen d'une bobine croisée sous forme d'antenne et représentant le point de référence, on mesure deux composantes orthogonales entre elles du champ magnétique, caractérisé en ce qu'au moins deux mesures indépendantes l'une de l'autre à une identité de lieu et simultanéité de temps de chacune des composantes orthogonales du champ sont réalisées, où les valeurs de la mesure par la contre-réaction des mesures d'une composante de champ orthogonale opposées ne sont influencées seulement en identité de lieu et simultanéité de temps à l'intérieur des limites d'erreurs.

2. Dispositif pour la réalisation du procédé selon la revendication 1, avec une bobine croisée exécutée comme antenne, se composant au moins d'un noyau qui est entouré de deux bobines qui chaque fois sert à l'acquisition d'une des composantes du champ orthogonales l'une par rapport à l'autre à partir d'un champ magnétique engendré par un câble de guidage, caractérisé en ce que les bobines (16, 17, 21, 22) sont constituées chacune d'au moins deux fils d'enroulement bobinés parallèlement entre eux, isolés électriquement l'un de l'autre ($L_{x1,2,3}$; $L_{y1,2,3}$) en fil résistant.

3. Dispositif selon la revendication 2, caractérisé en ce que les bobines sont prévues à trois fils.

4. Dispositif selon la revendication 2 ou 3, caractérisé en ce que les fils d'enroulement ($L_{x1,2,3}$; $L_{y1,2,3}$) de chacune des bobines (21, 22) sont parcourus par des courants continus qui se superposent aux courants induits par le champ magnétique.

5. Dispositif selon l'une des revendications 2 à 4, caractérisé en ce qu'aux bobines (21, 22) est associé un noyau de fer (20) en forme de E.

6. Dispositif selon la revendication 5, caractérisé en ce que le noyau de fer (20) est d'une dimension suffisante pour que la mesure de l'intervalle soit encore mesurable jusqu'à une variation de champ de trente fois.

Fig.1

Fig.2

Fig.3

7